(19) Europäisches Patentamt
European Patent Office
Office européen des brevets

(11) **EP 4 345 258 A1**

(12) **EUROPEAN PATENT APPLICATION**

(43) Date of publication:
**03.04.2024 Bulletin 2024/14**

(21) Application number: **23198395.8**

(22) Date of filing: **19.09.2023**

(51) International Patent Classification (IPC):
**F01D 17/08** (2006.01)        **F01D 19/02** (2006.01)
**F01D 21/12** (2006.01)        **F02C 9/28** (2006.01)

(52) Cooperative Patent Classification (CPC):
**F01D 17/085; F01D 19/02; F01D 21/12; F02C 9/28;**
F05D 2270/303; F05D 2270/313

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2022 US 202217947863**

(71) Applicant: **PRATT & WHITNEY CANADA CORP.
Longueuil, Québec J4G 1A1 (CA)**

(72) Inventors:
• **DEMERS, Francis**
  **(01BE5) Longueuil, J4G 1A1 (CA)**
• **PERSECHINO, Alesandro M.**
  **(01BE5) Longueuil, J4G 1A1 (CA)**
• **CRAINIC, Cristina**
  **(01BE5) Longueuil, J4G 1A1 (CA)**

(74) Representative: **Dehns
St. Bride's House
10 Salisbury Square
London EC4Y 8JD (GB)**

(54) **SYSTEMS AND METHODS FOR DETERMINING GAS TURBINE ENGINE TEMPERATURES**

(57)     A system for determining an indicated turbine temperature (ITT) for a gas turbine engine includes an engine control system. The engine control system includes a processor in communication with a non-transitory memory storing instructions, which instructions when executed by the processor, cause the processor to: determine a first estimated outlet temperature value for a high-pressure turbine of the gas turbine engine, determine an estimated work ($\dot{W}_{HPT}$) of the high-pressure turbine, determine an estimated inlet temperature value for the high-pressure turbine using the estimated work ($\dot{W}_{HPT}$), and determine the ITT by calculating a second estimated outlet temperature value using the estimated inlet temperature value, the second estimated outlet temperature value different than the first estimated outlet temperature value.

FIG. 1

EP 4 345 258 A1

**Description**

TECHNICAL FIELD

This disclosure relates generally to gas turbine engine operating limits and, more particularly, to systems and methods for determining an indicated turbine temperature (ITT) for a gas turbine engine.

BACKGROUND OF THE ART

A gas turbine engine for an aircraft may be subject to various operational power checks to verify that the aircraft can satisfy minimum power requirements for a flight or operation. In some cases, an indicated turbine temperature (ITT) for the gas turbine engine is used for determining operational power limits and maintenance requirements. Various systems and methods are known in the art for determining an ITT for a gas turbine engine. While these known systems and methods have various advantages, there is still room in the art for improvement.

SUMMARY

It should be understood that any or all of the features or embodiments described herein can be used or combined in any combination with each and every other feature or embodiment described herein unless expressly noted otherwise.

According to an aspect of the present disclosure, a system for determining an indicated turbine temperature (ITT) for a gas turbine engine includes an engine control system. The engine control system includes a processor in communication with a non-transitory memory storing instructions, which instructions when executed by the processor, cause the processor to: determine a first estimated outlet temperature value for a high-pressure turbine of the gas turbine engine, determine an estimated work ($\dot{W}_{HPT}$) of the high-pressure turbine, determine an estimated inlet temperature value for the high-pressure turbine using the estimated work ($\dot{W}_{HPT}$), and determine the ITT by calculating a second estimated outlet temperature value using the estimated inlet temperature value, the second estimated outlet temperature value different than the first estimated outlet temperature value.

In an embodiment of the above, the instructions, when executed by the processor, may further cause the processor to determine an ITT operating margin for the gas turbine engine.

In a further embodiment of any of the above, the instructions, when executed by the processor, may further cause the processor to compare the ITT operating margin to a predetermined threshold operating margin value to identify that a maintenance requirement of the gas turbine engine is present or absent.

In a further embodiment of any of the above, the instructions, when executed by the processor, may further cause the processor to compare the ITT to a predetermined ITT threshold value to identify that a high-temperature condition of the gas turbine engine is present or absent.

In a further embodiment of any of the above, the instructions, when executed by the processor, may further cause the processor to measure an exhaust gas temperature for the gas turbine engine. The step of determining the first estimated outlet temperature value may include determining the first estimated outlet temperature value using the exhaust gas temperature.

In a further embodiment of any of the above, the first estimated outlet temperature value may be different than the second estimated outlet temperature value.

In a further embodiment of any of the above, the step of determining the estimated inlet temperature value may include determining the estimated inlet temperature value using a state variable model executed by the engine control system.

According to another aspect of the present disclosure, a method for determining an indicated turbine temperature (ITT) for a gas turbine engine includes: determining a first estimated turbine outlet temperature value, determining an estimated compressor temperature increase value, determining an estimated turbine inlet temperature value using the first estimated outlet temperature value and the estimated compressor temperature increase value, applying a relationship constant for the turbine inlet and the turbine outlet to the estimated turbine inlet temperature value to determine the ITT for the gas turbine engine, and comparing the ITT to a predetermined ITT threshold value to identify that a high-temperature condition of the gas turbine engine is present or absent.

In an embodiment of the above, the method may further include determining an ITT operating margin for the gas turbine engine.

In a further embodiment of any of the above, the first estimated turbine outlet temperature value may represent a temperature value at an outlet of a high-pressure turbine of the gas turbine engine, the high-pressure turbine upstream of a low-pressure turbine of the gas turbine engine.

In a further embodiment of any of the above, the method may further include measuring an exhaust gas temperature for the gas turbine engine. The step of determining the first estimated turbine outlet temperature value may include determining the first estimated turbine outlet temperature value using the exhaust gas temperature.

In a further embodiment of any of the above, the first estimated outlet temperature value may be different than the ITT.

In a further embodiment of any of the above, the step of determining the estimated turbine inlet temperature value may include determining the estimated inlet temperature value using a state variable model.

In a further embodiment of any of the above, the method may further include measuring a compressor inlet temperature and a compressor outlet temperature. The step of determining the estimated compressor temperature increase value may include determining the estimated compressor temperature increase value using the compressor inlet temperature and the compressor outlet temperature.

According to another aspect of the present disclosure, a gas turbine engine includes a high-pressure spool, a low-pressure spool, and an engine control system. The high-pressure spool includes a high-pressure compressor, a high-pressure turbine, and a high-pressure shaft. The high-pressure shaft interconnects the high-pressure turbine and the high-pressure compressor. The high-pressure turbine includes a turbine inlet and a turbine outlet. The high-pressure compressor includes a compressor inlet and a compressor outlet. The low-pressure spool including a low-pressure compressor, a low-pressure turbine, and a low-pressure shaft. The low-pressure shaft interconnects the low-pressure turbine and the low-pressure compressor. The engine control system including a processor in communication with a non-transitory memory storing instructions, which instructions when executed by the processor, cause the processor to: determine a first estimated outlet temperature value for the high-pressure turbine, determine an inlet temperature value for the high-pressure turbine using the first estimated outlet temperature value, and determine the indicated turbine temperature (ITT) by calculating a second estimated outlet temperature value using the inlet temperature value and a relationship constant for the turbine inlet and the turbine outlet.

In an embodiment of the above, the instructions, when executed by the processor, may further cause the processor to determine a temperature increase value for the high-pressure compressor. The step of determining the inlet temperature value may include determining the inlet temperature value using the first estimated outlet temperature value and the temperature increase value.

In a further embodiment of any of the above, the step of determining the temperature increase value for the high-pressure compressor may include determining the temperature increase value using an inlet temperature for the high-pressure compressor and an outlet temperature for the high-pressure compressor.

In a further embodiment of any of the above, the step of determining the temperature increase value for the high-pressure compressor may include estimating the inlet temperature and the outlet temperature using a state variable model executed by the engine control system.

In a further embodiment of any of the above, the gas turbine engine may further include a first sensor and a second sensor. The first sensor may be disposed at the compressor inlet. The second sensor may be disposed at the compressor outlet. The step of determining the temperature increase value for the high-pressure compressor may include measuring the inlet temperature with the first sensor and measuring the outlet temperature with the second sensor.

In a further embodiment of any of the above, the gas turbine engine may further include a first sensor and a second sensor. The first sensor and the second sensor may be disposed at the high-pressure shaft. The step of determine the inlet temperature value for the high-pressure turbine includes: measuring a shaft rotation speed of the high-pressure shaft with the first sensor and measuring a shaft torque of the high-pressure shaft with the second sensor and determining work ($\dot{W}_{HPT}$) of the high-pressure turbine using the shaft rotation speed and the shaft torque.

The present disclosure, and all its aspects, embodiments and advantages associated therewith will become more readily apparent in view of the detailed description provided below, including the accompanying drawings.

DESCRIPTION OF THE DRAWINGS

FIG. 1 illustrates a schematic view of a gas turbine engine assembly, in accordance with one or more embodiments of the present disclosure.

FIG. 2 illustrates a flowchart depicting a method for determining an indicated turbine temperature (ITT) for a gas turbine engine, in accordance with one or more embodiments of the present disclosure.

FIG. 3 illustrates a flowchart depicting an exemplary application of at least a portion of the method of FIG. 2, in accordance with one or more embodiments of the present disclosure.

FIG. 4 illustrates a flowchart depicting a method for using an indicated turbine temperature (ITT) to operate a gas turbine engine, in accordance with one or more embodiments of the present disclosure.

DETAILED DESCRIPTION

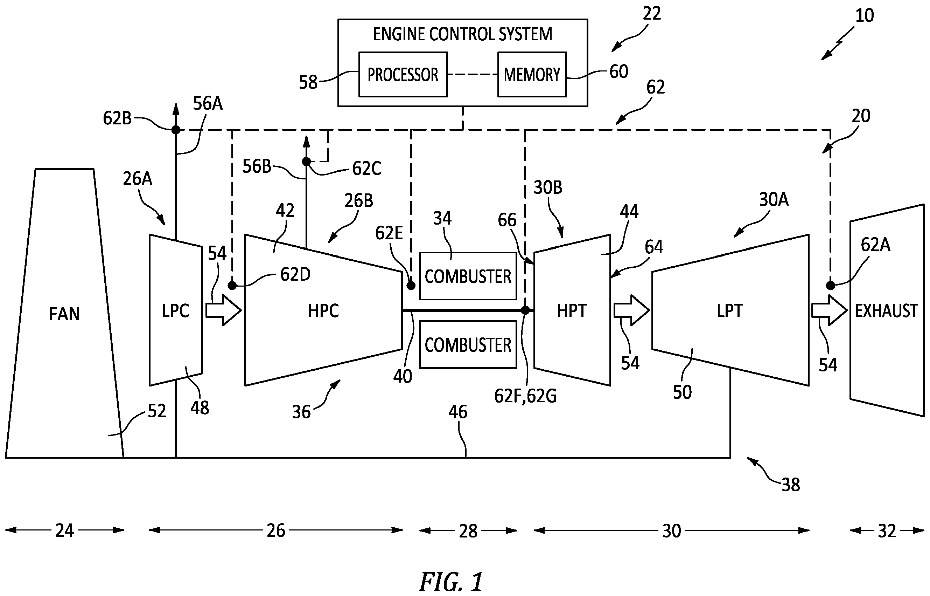

FIG. 1 illustrates a gas turbine engine assembly 10. The gas turbine engine assembly 10 may form a portion of a propulsion system for an aircraft, however, the present disclosure is not limited to any particular application of the gas turbine engine assembly 10. The gas turbine engine assembly 10 of FIG. 1 includes a gas turbine engine 20 and an engine control system 22.

The gas turbine engine 20 of FIG. 1 is configured as a turbofan engine, however, the present disclosure may also apply to other gas turbine engine configurations such as, but not limited to, a turboprop gas turbine engine, a turboshaft gas turbine engine, a turbojet gas turbine engine, a propfan gas turbine engine, etc. The gas turbine engine 20 of FIG. 1, for example, includes a fan section 24, a compressor section 26, a combustor section 28, a turbine section 30, and an exhaust section 32. The compressor section 26 may include a low-pressure compressor (LPC) 26A and a high-pressure compressor (HPC) 26B. The combustor section 28 includes a combustor 34. The turbine section 30 may include a low-pressure turbine (LPT) 30A and a high-pressure turbine (HPT) 30B. At least the engine sections 26, 28, and 30, may be collectively referred to as an "engine core."

The gas turbine engine 20 of FIG. 1 includes a first rotational assembly 36 (e.g., a high-pressure spool) and a second rotational assembly 38 (e.g., a low-pressure spool). The first rotational assembly 36 and the second rotational assembly 38 are mounted for rotation about a rotational axis, which rotational axis may be an axial centerline of the gas turbine engine 20. While the present disclosure is described with respect to the two-spool architecture of the gas turbine engine 20 of FIG. 1, it should be understood that the present disclosure may also apply to other gas turbine engine configurations, for example, those with single-spool or three-spool architectures.

The first rotational assembly 36 includes a first shaft 40, a bladed first compressor rotor 42, and a bladed first turbine rotor 44. The first shaft 40 interconnects the bladed first compressor rotor 42 and the bladed first turbine rotor 44. The second rotational assembly 38 includes a second shaft 46, a bladed second compressor rotor 48, a bladed second turbine rotor 50, and a bladed fan 52. The second shaft 46 of FIG. 1 interconnects the bladed second compressor rotor 48, the bladed second turbine rotor 50, and the bladed fan 52. The second shaft 46 may be connected to the bladed fan 52, for example, by one or more speed-reducing gear assemblies (not shown) to drive the bladed fan 52 at a reduced rotational speed relative to the second shaft 46. The combustor 34 of FIG. 1 is disposed between (e.g., axially between) the bladed first compressor rotor 42 and the bladed first turbine rotor 44.

During operation of the gas turbine engine 20 of FIG. 1, air enters the gas turbine engine 20 through the fan section 24 and is directed into a core flowpath 54 by the bladed fan 52. The bladed fan 52 may additionally direct air along a second flowpath (e.g., a bypass flowpath) which is disposed outside (e.g., radially outside) of the engine core. The core flowpath 54 extends through the gas turbine engine 20 sections 26, 28, 30, and 32 of FIG. 1, and exits the gas turbine engine 20 through the exhaust section 32. The gas (e.g., air) within the core flowpath 54 may be referred to as "core gas." The core gas is compressed by the bladed second compressor rotor 48 (e.g., the LPC 26A) and the bladed first compressor rotor 42 (e.g., the HPC 26B) and directed into a combustion chamber of the combustor 34. Fuel is injected into the combustion chamber and mixed with the compressed core gas to provide a fuel-air mixture. This fuel-air mixture is ignited and combustion products thereof flow through and sequentially cause the bladed first turbine rotor 44 (e.g., the HPT 30B) and the bladed second turbine rotor 50 (e.g., the LPT 30A) to rotate. The rotation of the bladed first turbine rotor 44 and the bladed second turbine rotor 50, respectively, drive rotation of the first rotational assembly 36 and the second rotational assembly 38. The combusted fuel-air mixture flows from the bladed second turbine rotor 50 along the core flow path 54 to the exhaust section 32. The combusted fuel-air mixture which enters exhaust section 32 may be referred to as "exhaust gas." The LPC 26A and the HPC 26B may additionally provide pressurized air (e.g., bleed air) 56A, 56B which may be used for operation of one or more systems of the gas turbine engine 20 and/or an associated aircraft such as, but not limited to, anti-icing and/or de-icing systems, environmental control systems (e.g., aircraft cabin pressurization), pneumatic actuation systems, etc.

The engine control system 22 of FIG. 1 includes a processor 58 and memory 60. The memory 60 is in signal communication with the processor 58. The processor 58 may include any type of computing device, computational circuit, or any type of process or processing circuit capable of executing a series of instructions that are stored in the memory 60, thereby causing the processor 58 to perform or control one or more steps or other processes. The processor 58 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. The instructions stored in memory 60 may represent one or more algorithms for controlling the aspects of the gas turbine engine 20, and the stored instructions are not limited to any particular form (e.g., program files, system data, buffers, drivers, utilities, system programs, etc.) provided they can be executed by the processor 58. The memory 60 may be a non-transitory computer readable storage medium configured to store instructions that when executed by one or more processors, cause the one or more processors to perform or cause the performance of certain functions. The memory 60 may be a single memory device or a plurality of memory devices. A memory device may include a storage area network, network attached storage, as well a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the engine control system 22 may be achieved via the use of hardware, software, firmware, or any combination thereof. The engine control system 22 may also include input and output devices (e.g., keyboards, buttons, switches, touch screens, video monitors, sensor readouts, data ports, etc.) that enable the operator to input instructions, receive data, etc.

The engine control system 22 may form or otherwise be part of an electronic engine controller (EEC) for the gas turbine engine 20. The EEC may control operating parameters of the gas turbine engine 20 including, but not limited to, fuel flow, stator vane position, compressor air bleed valve position, etc. so as to control an engine power and/or thrust of the gas turbine engine 20. In some embodiments, the EEC may be part of a full authority digital engine control (FADEC) system for the gas turbine engine 20.

The engine control system 22 receives data associated with operation of the gas turbine engine 20 and/or an associated aircraft. The data may include operational parameters (e.g., pressure, temperature, rotation speed, torque, etc.) for the gas turbine engine 20. The engine control system 22 may include and be in communication (e.g., signal communication) with one or more sensors 62 distributed throughout the gas turbine engine 20 and/or an associated aircraft. The sensors 62 may include, but are not limited to, one or more of the following: an exhaust gas temperature (EGT) sensor 62A, a LPC bleed flow sensor 62B, a HPC bleed flow sensor 62C, a HPC inlet temperature ($T_{2.5}$) sensor 62D, a HPC outlet temperature ($T_{3.0}$) sensor 62E, a first shaft rotation speed ($R_{HP}$) sensor 62F, or a first shaft torque ($T_{HP}$) sensor 62G.

The engine control system 22 may additionally include one or more data tables (e.g., data tables stored in the memory 60), which data tables may include expected operational parameters associated with various operational conditions for the gas turbine engine 20 and/or an associated aircraft. Additionally or alternatively, data associated with operation of the gas turbine engine 20 and/or an associated aircraft may be derived or modeled by the engine control system 22. For example, the engine control system 22 may include instructions which, when executed, allow the engine control system 22 to execute a model (e.g., a computer-implemented model) of one or more operational parameters of the gas turbine engine 20 and/or an associated aircraft in a virtual (e.g., digital) environment which closely represents the physical system (e.g., a component, assembly, system, etc. of a gas turbine engine) by accounting for factors such as, but not limited to, kinematics, static and dynamic behaviors, component surface characteristics, component geometry, shaft torque, engine power, pressure, temperature, altitude, vibration, and the like. For example, the memory 60 may include instructions which, when executed by the processor 58, cause the processor to execute a state variable model, which state variable model may be a simplified linear representation of the gas turbine engine 20 thermodynamics. For example, the state variable model may include or otherwise use first-order differential equations which describe a dynamic set of state variables (e.g., variables used to describe the mathematical state of a dynamic system). The engine control system 22 may evaluate and/or estimate various operational parameters of the gas turbine engine 20 using, for example, using the state variable model. The engine control system 22 may use equations derived, for example, using the first law of thermodynamics [1], which equations may be further calibrated using gas turbine engine test data (e.g., test data for instances of the gas turbine engine 20):

$$\dot{Q} - \dot{W} = \dot{m} C_p (T_{out} - T_{in}) \qquad [1]$$

Gas turbine engines, such as the gas turbine engine 20, may undergo periodical engine power assurance checks (EPAC) to verify that the gas turbine engine and/or an associated aircraft can satisfy the minimum power requirements for a planned flight or operation. The EPAC may be used to estimate one or more engine operating margins for one or more engine parameters the gas turbine engine. The available engine operating margins may provide an indication of the engine operational time and/or capability which is available before the gas turbine engine should undergo maintenance (e.g., a periodic overhaul). An indicated turbine temperature (ITT) of a gas turbine engine may be used to monitor the engine health of the gas turbine engine, for example, by determining engine operating margins, verifying minimum power requirements, as well as monitoring degradation of the gas turbine engine over time. As an example, the ITT may refer to or be derived from an estimated value of a core gas temperature (e.g., $T_{4.5}$) at (e.g., on, adjacent, or proximate) an outlet of a high-pressure turbine, such as the HPT 30B of FIG. 1. The $T_{4.5}$ location of the gas turbine engine 20 is schematically represented by $T_{4.5}$ 64. The present disclosure ITT, however, is not limited to association with the temperature $T_{4.5}$ 64 of the gas turbine engine 20.

A maximum temperature of the core gas in the thermodynamic cycle of the gas turbine engine 20 may be quantified and monitored during operation of the gas turbine engine 20. The limiting operational temperature may occur, for example, at (e.g., on, adjacent, or proximate) an inlet of a high-pressure turbine, such as the HPT 30B of FIG. 1. This temperature $T_{4.1}$ location of the gas turbine engine 20 is schematically represented by $T_{4.1}$ 66. In at least some gas turbine engines, the temperature $T_{4.1}$ 66 may be a limiting operational temperature for the gas turbine engine 20. In other words, the temperature $T_{4.1}$ 66 may limit the operational power output of the gas turbine engine 20. For example, the operational power output of the gas turbine engine 20 may be controlled to maintain the temperature $T_{4.1}$ 66 below a maximum operating temperature value. The maximum operating temperature value for the temperature $T_{4.1}$ 66 may be substantiated during an endurance certification test for a gas turbine engine (e.g., the gas turbine engine 20). However, during operation of a gas turbine engine (e.g., for flight), the temperature $T_{4.1}$ 66 and/or the temperature $T_{4.5}$ 64 may be difficult to directly measure due to possible sensor and material temperature limits. Instead, the temperature $T_{4.1}$ 66 and/or the temperature $T_{4.5}$ 64 may be estimated based on a temperature measured downstream from the temperature $T_{4.1}$ 66 and/or the temperature $T_{4.5}$ 64 locations.

The temperature $T_{4.1}$ 66 and the temperature $T_{4.5}$ 64 may generally be understood to have a relationship such that a value of the temperature $T_{4.1}$ 66 may be estimated using a value of the temperature $T_{4.5}$ 64. The relationship between the temperature $T_{4.1}$ 66 and the $T_{4.5}$ 64 may be determined, for example, during a development phase and/or testing of a gas turbine engine, such as the gas turbine engine 20. For example, the temperature $T_{4.1}$ 66 and the temperature $T_{4.5}$ 64 may be assumed to have a fixed relationship such that temperature $T_{4.5}$ 64 may be multiplied by a relationship constant ($k_{4.5-4.1}$) to arrive at an estimated value of the temperature $T_{4.1}$ 66. For example, the temperature $T_{4.5}$ 64 may be approximately equal to $k_{4.5-4.1}T_{4.1}$, where $0 < k_{4.5-4.1} < 1$. Alternatively, the relationship between the temperature $T_{4.1}$ 66 and the $T_{4.5}$ 64 may be determined using one or more computer-implemented models.

The ITT for the gas turbine engine 20 may be estimated by the engine control system 22 based, at least in part, on a directly measured or estimated value of the temperature $T_{4.5}$ 64. The value of the ITT may be trimmed (e.g., modified) by the engine control system 22 to ensure that the related temperature $T_{4.1}$ 66 does not exceed an operational limit. For example, the ITT may be trimmed using the relationship constant ($k_{4.5-4.1}$) so that the ITT is representative of an estimated value of the temperature $T_{4.1}$ 66. By using the relationship between the temperature $T_{4.1}$ 66 and the temperature $T_{4.5}$ 64, the ITT may be used to account for temperature $T_{4.1}$ 66 operational limitations during operation of the gas turbine engine 20. In other words, the ITT may be trimmed such that maintaining the ITT within acceptable operational limits may also maintain the temperature $T_{4.1}$ 66 within acceptable operational limits (e.g., below maximum operating temperature value for the temperature $T_{4.1}$ 66).

We have observed that the temperature $T_{4.1}$ 66 and the temperature $T_{4.5}$ 64 relationship changes as a gas turbine engine, such as the gas turbine engine 20, is deteriorated through operational use. In some cases, most or a substantial amount of the deterioration experienced by a gas turbine engine may be contributed by the high-pressure turbine. As a result, the trimmed ITT value may become increasingly over-estimated (e.g., over-conservative) as the gas turbine engine experiences increasing levels of deterioration. This is because the fixed relationship constant ($k_{4.5-4.1}$), assumed for trimming the ITT, may no longer be accurate. While the over-estimated ITT value may facilitate additional safety margin for operation of the gas turbine engine, the over-estimated ITT value may also present an unnecessary limitation on the field life of the gas turbine engine, thereby potentially presenting increased maintenance requirements (e.g., engine overhaul) which can be costly and burdensome.

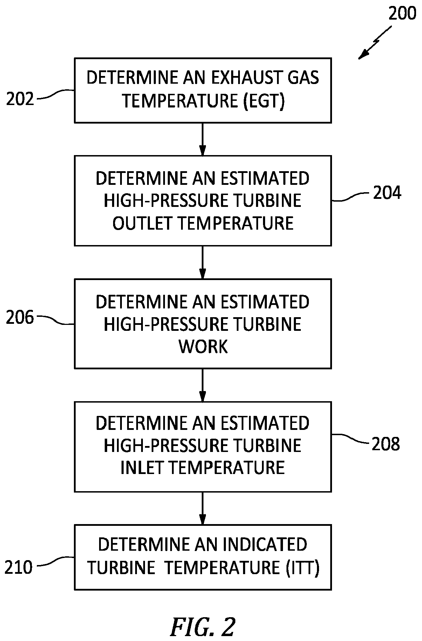

Referring to FIGS. 1 and 2, a Method 200 for determining an ITT for a gas turbine engine (e.g., the gas turbine engine 20) is provided. FIG. 2 illustrates a flowchart for the Method 200. The Method 200 may be performed using the gas turbine engine 20 and engine control system 22. For example, the processor 58 may execute instructions stored in memory 60, thereby causing the engine control system 22 and/or its processor 58 to execute or otherwise control one or more steps of the Method 200. However, while the Method 200 may be described herein with respect to the gas turbine engine 20 and/or the engine control system 22, the present disclosure Method 200 is not limited to use with the gas turbine engine 20 and/or engine control system 22. Unless otherwise noted herein, it should be understood that the steps of Method 200 are not required to be performed in the specific sequence in which they are discussed below and, in some embodiments, the steps of Method 200 may be performed separately or simultaneously.

Step 202 may include determining an exhaust gas temperature (EGT) of the exhaust gas in the exhaust section 32. The EGT may be determined, for example, by directly measuring the EGT temperature using the EGT sensor 62A.

Step 204 includes determining a first estimated HPT outlet temperature $T_{4.5}$ value for the HPT 30B. As used herein, the term "estimated" refers to a value of a parameter (e.g., a temperature) which is not directly measured, for example, by a sensor, a probe, or the like. An estimated value may be calculated or otherwise determined using, for example, assumed values, modeled values, theoretical values, etc. An estimated value may, of course, also be determined using one or more values of directly measured parameters in combination with other nonmeasured values (e.g., assumed values, modeled values, theoretical values, etc.). The first estimated HPT outlet temperature $T_{4.5}$ value for the HPT 30B may be determined, for example, using a computer-implemented model, such as a model of the gas turbine engine 20 executed by the engine control system 22.

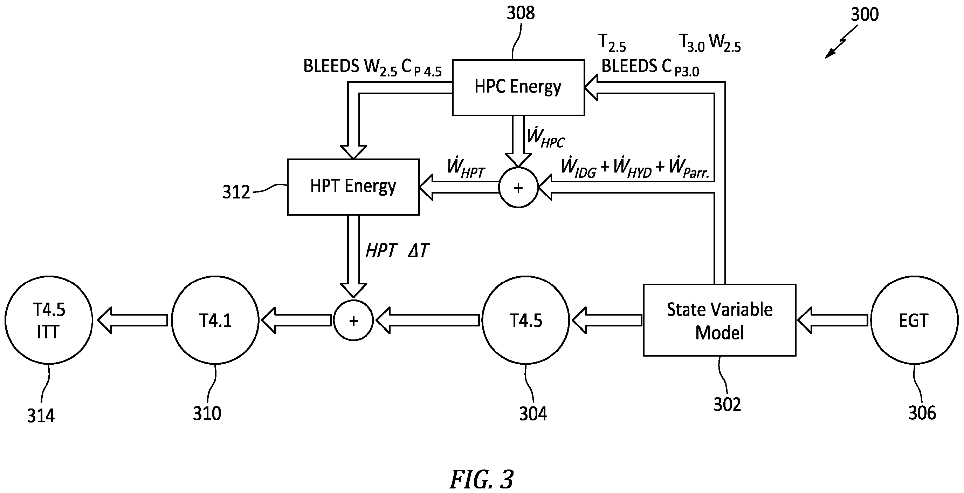

Referring now to FIGS. 1-3, FIG. 3 illustrates a flowchart 300 for an exemplary application of at least a portion of the Method 200. In the flowchart 300, a state variable model 302 is executed by the engine control system 22 to determine the first estimated HPT outlet temperature $T_{4.5}$ value 304. The first estimated HPT outlet temperature $T_{4.5}$ value 304 of FIG. 3 is determined by the engine control system 22, for example, using the state variable model 302 and the exhaust gas temperature (EGT) 306 (see Step 202). The first estimated HPT outlet temperature $T_{4.5}$ value 304 may be estimated using an estimated temperature decrease across the LPT 30A (e.g., a temperature decrease from an inlet of the LPT 30A to an outlet of the LPT 30A). The present disclosure is not limited to the use of the exhaust gas temperature (EGT) 306 for determining the first estimated HPT outlet temperature $T_{4.5}$ value 304.

Step 206 may include determining an estimated work ($\dot{W}_{HPT}$) for the HPT 30B. The estimated value of the work ($\dot{W}_{HPT}$) may be determined, for example, using the state variable model 302. Work ($\dot{W}_{HPT}$) for the HPT 30B may be estimated, for example, by applying an energy and flow continuity balance relationship for the first rotational assembly 36 (e.g., a high-pressure spool). Equation [2] indicates an exemplary derivation of the work ($\dot{W}_{HPT}$) for the HPT 30B using the first law of thermodynamics, including work ($\dot{W}_{HPC}$) for the HPC 26B, work ($\dot{W}_{HYD}$) for one or more hydraulic pumps for hydraulic systems of the gas turbine engine 20, work ($\dot{W}_{IDG}$) for an integrated drive generator (IDG) of the gas turbine engine 20, and work ($\dot{W}_{PARR}$) for parasitic losses associated with the first-rotational assembly 36.

$$\dot{W}_{HPT} = \dot{W}_{HPC} + \left( \dot{W}_{HYD} + \dot{W}_{IDG} \right) + \dot{W}_{PARR} \qquad [2]$$

The present disclosure, of course, is not limited to the aforementioned Equation [2] for determining the estimated work ($\dot{W}_{HPT}$) for the HPT 30B and additional or alternative work values or other gas turbine engine 20 parameters may be used. Values of the work ($\dot{W}_{HYD}$), work ($\dot{W}_{IDG}$), and work ($\dot{W}_{PARR}$) may be estimated (e.g., modeled), directly measured from the gas turbine engine 20, and/or experimentally or theoretically determined. As an alternative, for example, the work ($\dot{W}_{HPT}$) for the HPT 30B may be estimated or otherwise determined by directly measuring one or both of the first shaft 40 rotation speed ($R_{HP}$) or the first shaft 40 torque ($T_{HP}$) with the sensors 62F, 62G.

Step 206 may include determining an estimated value of the work ($\dot{W}_{HPC}$) for the HPC 26B. The estimated value of the work ($\dot{W}_{HPC}$) may be determined, for example, by the state variable model 302 using additional operational parameters of the gas turbine engine 20 such as, but not limited to, HPC inlet temperature ($T_{2.5}$), HPC outlet temperature ($T_{3.0}$), inlet core gas flow rate ($W_{2.5}$) for the HPC 26B, pressurized air extraction flow rates for the LPC 26A and/or the HPC 26B (collectively referred to as "BLEEDS" in FIG. 3), and average heat capacity ($C_{P3.0}$) for the HPC 26B. The estimated value of the work ($\dot{W}_{HPC}$) for the HPC 26B may be determined, at least in part, using an estimated temperature increase value 308 for the HPC 26B (e.g., a temperature increase of the core gas from the HPC 26B inlet to the HPC 26B outlet, $T_{3.0}$-$T_{2.5}$), which estimated temperature increase value 308 is represented in FIG. 3 as an energy of the HPC 26B. The estimated temperature increase value 308 may be determined using the state variable model 302. The operational parameters of the gas turbine engine 20 may be estimated (e.g., modeled), directly measured from the gas turbine engine 20, and/or experimentally or theoretically determined. For example, the HPC inlet temperature ($T_{2.5}$) and/or the HPC outlet temperature ($T_{3.0}$) may be estimated using the state variable model 302. The HPC inlet temperature ($T_{2.5}$) and/or the HPC outlet temperature ($T_{3.0}$) may alternatively be directly measured, for example, with the sensors 62D, 62E. Direct measurement of the HPC inlet temperature ($T_{2.5}$) and/or the HPC outlet temperature ($T_{3.0}$) may facilitate a more accurate determination of the ITT, but inclusion of the sensors 62D, 62E in the gas turbine engine 20 may present increased core flow pressure loss, additional system complexity, and/or increased total weight for the gas turbine engine 20. The pressurized air extraction flow rates for the LPC 26A and/or the HPC 26B may be measured, for example, using the sensors 62B, 62C. Equation [3] indicates an exemplary equation for estimating work ($\dot{W}_{HPC}$).

$$\dot{W}_{HPC} = f(W_{2.5}, BLEEDS)C_{P3.0}(T_{3.0} - T_{2.5}) \qquad [3]$$

Step 208 includes determining an estimated inlet temperature $T_{4.1}$ value 310 for the HPT 30B. The estimated inlet temperature $T_{4.1}$ value 310 may be determined using the first estimated HPT outlet temperature $T_{4.5}$ value 304 and an estimated temperature decrease value 312 for the HPT 30B (e.g., a temperature decrease of the core gas from the HPT 30B inlet to the HPT 30B outlet). The estimated temperature decrease value 312 is represented in FIG. 3 as an energy of the HPT 30B. The estimated temperature decrease value 312 (e.g., $T_{4.1}$-$T_{4.5}$) may be determined, for example, by the state variable model 302 using the work ($\dot{W}_{HPT}$) for the HPT 30B and additional operational parameters of the gas turbine engine such as, but not limited to, the inlet core gas flow rate ($W_{2.5}$) for the HPC 26B, the pressurized air extraction flow rates for the LPC 26A and/or the HPC 26B (collectively referred to as "BLEEDS" in FIG. 3), and average heat capacity ($C_{P4.5}$) for the HPT 30B. The operational parameters of the gas turbine engine 20 may be estimated (e.g., modeled), directly measured from the gas turbine engine 20, and/or experimentally or theoretically determined. Equation [4] indicates an exemplary equation for estimating the temperature decrease value 312 (e.g., $T_{4.1}$ - $T_{4.5}$).

$$\frac{\dot{W}_{HPT}}{f(W_{25}, Bleeds)C_{P4.5}} = (T_{4.1} - T_{4.5}) \qquad [4]$$

In Step 210, the ITT for the gas turbine engine 20 is determined. Determining the ITT may include calculating a second estimated HPT outlet temperature $T_{4.5}$ value 312 using the estimated inlet temperature $T_{4.1}$ value 310. The second estimated HPT outlet temperature $T_{4.5}$ value 312 may be different than (e.g., lower than) the first estimated HPT outlet temperature $T_{4.5}$ value 304. As previously discussed, the temperature $T_{4.1}$ 66 and the temperature $T_{4.5}$ 64 may generally be understood to have a relationship such that a value of the temperature $T_{4.1}$ 66 may be estimated using a value of the temperature $T_{4.5}$ 64, for example, by applying the relationship constant ($k_{4.5-4.1}$) to the temperature $T_{4.5}$ 64. Step 210 may include, therefore, applying the known relationship constant ($k_{4.5-4.1}$) for the gas turbine engine 20 to the estimated inlet temperature $T_{4.1}$ value 310 to calculate an estimated value of the second estimated HPT outlet temperature $T_{4.5}$ value 312, which second estimated HPT outlet temperature $T_{4.5}$ value 312 may be understood as the ITT for the gas turbine engine 20.

The Method 200 of the present disclosure uses an energy balance relationship of the first rotational assembly 36 (e.g., a high-pressure spool) to estimate the temperature $T_{4.1}$ 66 from the temperature $T_{4.5}$ 64, thereby facilitating estimation of the temperature $T_{4.1}$ 66 without regard to component efficiencies of the first rotational assembly 36. The determination of the ITT in the Method 200 may prevent overestimation of ITT values as a result of HPT 30B deterioration which, in turn, may facilitate longer times between gas turbine engine maintenance (e.g., engine overhauls) as well as cost saving for the particular gas turbine engine program.

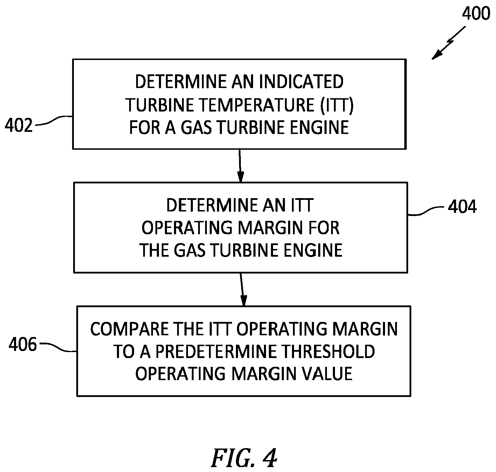

Referring to FIG. 4, a Method 400 for using an ITT value to operate (e.g., control, manage, and/or maintain) a gas turbine engine (e.g., the gas turbine engine 20) is provided. FIG. 4 illustrates a flowchart for the Method 400. The Method 400 may be performed using the gas turbine engine 20 and engine control system 22. For example, the processor 58 may execute instructions stored in memory 60, thereby causing the engine control system 22 and/or its processor 58 to execute or otherwise control one or more steps of the Method 400. However, while the Method 400 may be described herein with respect to the gas turbine engine 20 and/or the engine control system 22, the present disclosure Method 400 is not limited to use with the gas turbine engine 20 and/or engine control system 22. Unless otherwise noted herein, it should be understood that the steps of Method 400 are not required to be performed in the specific sequence in which they are discussed below and, in some embodiments, the steps of Method 400 may be performed separately or simultaneously.

In Step 402, the engine control system 22 may obtain or otherwise determine an ITT value for the gas turbine engine, for example, using the Method 200. The ITT value may be compared to a predetermined ITT threshold value. For example, the engine control system 22 may determine if the ITT value has or has not increased above the predetermined ITT threshold value. The engine control system 22 may compare the ITT value to the predetermined ITT threshold value to identify that a high-temperature condition of the gas turbine engine 20 is present or absent. In the event that a high-temperature condition of the gas turbine engine 20 is identified to be present, the engine control system 22 may provide a warning notification (e.g., a warning light, an audible alarm, etc.) to a pilot and/or crew for an associated aircraft for the gas turbine engine 20. A determination that the ITT value has increased above the predetermined ITT threshold value may also indicate that the gas turbine engine 20 may require an engine overhaul.

In Step 404, the engine control system 22 may determine an ITT operating margin for the gas turbine engine 20, which ITT operating margin may represent an allowable operational range between the determined ITT value and a maximum ITT value for the gas turbine engine 20. The engine control system 22 may cause the ITT operating margin to be displayed. For example, the ITT operating margin may be displayed (e.g., on a computer screen, digital display, etc.) for a pilot and/or crew of an aircraft (e.g., the aircraft 1000, see FIG. 1) associated with the gas turbine engine 20. The ITT operating margin may provide the pilot and/or crew with a live or substantially live indication of the available power for the gas turbine engine 20. The available ITT operating margin may also provide an indication of the gas turbine engine 20 operational time and/or capability which may be available before the gas turbine engine 20 may undergo maintenance (e.g., a periodic overhaul).

In Step 406, the ITT operating margin may be compared to a predetermined threshold operating margin value. For example, the engine control system 22 may determine if the ITT operating margin has or has not decreased below a predetermined threshold operating margin value. The engine control system 22 may compare the ITT operating margin to the predetermined operating margin value to identify that a maintenance requirement of the gas turbine engine is present or absent. If the ITT operating margin decreases below the predetermined threshold operating margin value, the engine control system 22 may flag (e.g., identify) the gas turbine engine 20 for scheduling and/or performance of maintenance. The engine control system 22 may provide a maintenance notification to a pilot, crew, and/or maintenance personnel for an associated aircraft for the gas turbine engine 20.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Accordingly, the present disclosure is not to be restricted except in light of the attached claims and their equivalents.

**Claims**

1. A system for determining an indicated turbine temperature for a gas turbine engine, the system comprising:
an engine control system including a processor in communication with a non-transitory memory storing instructions, which instructions when executed by the processor cause the processor to:

   determine a first estimated outlet temperature value for a high-pressure turbine of the gas turbine engine;
   determine an estimated work ($\dot{W}_{HPT}$) of the high-pressure turbine;
   determine an estimated inlet temperature value for the high-pressure turbine using the estimated work ($\dot{W}_{HPT}$); and
   determine the indicated turbine temperature by calculating a second estimated outlet temperature value using the estimated inlet temperature value, the second estimated outlet temperature value different than the first estimated outlet temperature value.

2. The system of claim 1, wherein the instructions, when executed by the processor, further cause the processor to determine an indicated turbine temperature operating margin for the gas turbine engine, optionally wherein the instructions, when executed by the processor, further cause the processor to compare the indicated turbine temperature operating margin to a predetermined threshold operating margin value to identify that a maintenance requirement of the gas turbine engine is present or absent.

3. The system of claim 1 or 2, wherein the instructions, when executed by the processor, further cause the processor to compare the indicated turbine temperature to a predetermined indicated turbine temperature threshold value to identify that a high-temperature condition of the gas turbine engine is present or absent.

4. The system of any preceding claim, wherein the instructions, when executed by the processor, further cause the processor to measure an exhaust gas temperature for the gas turbine engine, and wherein the step of determining the first estimated outlet temperature value includes determining the first estimated outlet temperature value using the exhaust gas temperature.

5. The system of any preceding claim, wherein the first estimated outlet temperature value is different than the second estimated outlet temperature value.

6. The system of any preceding claim, wherein the step of determining the estimated inlet temperature value includes determining the estimated inlet temperature value using a state variable model executed by the engine control system.

7. A method for determining an indicated turbine temperature for a gas turbine engine, the method comprising:

determining a first estimated turbine outlet temperature value;
determining an estimated compressor temperature increase value;
determining an estimated turbine inlet temperature value using the first estimated outlet temperature value and the estimated compressor temperature increase value;
applying a relationship constant for the turbine inlet and the turbine outlet to the estimated turbine inlet temperature value to calculate the indicated turbine temperature for the gas turbine engine; and
comparing the indicated turbine temperature to a predetermined indicated turbine temperature threshold value to identify that a high-temperature condition of the gas turbine engine is present or absent.

8. The method of claim 7, further comprising determining an indicated turbine temperature operating margin for the gas turbine engine.

9. The method of claim 7 or 8, wherein:
the first estimated turbine outlet temperature value represents a temperature value at an outlet of a high-pressure turbine of the gas turbine engine, the high-pressure turbine upstream of a low-pressure turbine of the gas turbine engine, and/or
the first estimated outlet temperature value is different than the indicated turbine temperature

10. The method of any of claims 7 to 9, further comprising:

measuring an exhaust gas temperature for the gas turbine engine, and wherein the step of determining the first estimated turbine outlet temperature value includes determining the first estimated turbine outlet temperature value using the exhaust gas temperature, and/or
measuring a compressor inlet temperature and a compressor outlet temperature, wherein the step of determining the estimated compressor temperature increase value includes determining the estimated compressor temperature increase value using the compressor inlet temperature and the compressor outlet temperature.

11. The method of any of claims 7 to 10, wherein the step of determining the estimated turbine inlet temperature value includes determining the estimated inlet temperature value using a state variable model.

12. A gas turbine engine comprising:

a high-pressure spool including a high-pressure compressor, a high-pressure turbine, and a high-pressure shaft, the high-pressure shaft interconnecting the high-pressure turbine and the high-pressure compressor, the high-pressure turbine including a turbine inlet and a turbine outlet, the high-pressure compressor including a compressor inlet and a compressor outlet;
a low-pressure spool including a low-pressure compressor, a low-pressure turbine, and a low-pressure shaft, the low-pressure shaft interconnecting the low-pressure turbine and the low-pressure compressor; and
an engine control system including a processor in communication with a non-transitory memory storing instructions, which instructions when executed by the processor, cause the processor to:

determine a first estimated outlet temperature value for the high-pressure turbine;
determine an inlet temperature value for the high-pressure turbine using the first estimated outlet temperature value; and
determine the indicated turbine temperature by calculating a second estimated outlet temperature value using the inlet temperature value and a relationship constant for the turbine inlet and the turbine outlet.

13. The gas turbine engine of claim 12, wherein the instructions, when executed by the processor, further cause the processor to determine a temperature increase value for the high-pressure compressor, and wherein the step of determining the inlet temperature value includes determining the inlet temperature value using the first estimated outlet temperature value and the temperature increase value.

14. The gas turbine engine of claim 13, wherein the step of determining the temperature increase value for the high-pressure compressor includes determining the temperature increase value using an inlet temperature for the high-pressure compressor and an outlet temperature for the high-pressure compressor, optionally wherein:

the step of determining the temperature increase value for the high-pressure compressor includes estimating the inlet temperature and the outlet temperature using a state variable model executed by the engine control system, and/or

the gas turbine engine further comprises a first sensor and a second sensor, the first sensor disposed at the compressor inlet, the second sensor disposed at the compressor outlet, wherein the step of determining the temperature increase value for the high-pressure compressor includes measuring the inlet temperature with the first sensor and measuring the outlet temperature with the second sensor.

15. The gas turbine engine of any of claims 12 to 14, further comprising a first sensor and a second sensor, the first sensor and the second sensor disposed at the high-pressure shaft, wherein the step of determine the inlet temperature value for the high-pressure turbine includes:

measuring a shaft rotation speed of the high-pressure shaft with the first sensor and measuring a shaft torque of the high-pressure shaft with the second sensor; and

determining work ($\dot{W}_{HPT}$) of the high-pressure turbine using the shaft rotation speed and the shaft torque.

*FIG. 1*

ENGINE CONTROL SYSTEM

PROCESSOR — 58

MEMORY — 60

22

10

62

20

FAN

LPC — 26A

HPC — 26B

42

62D

62E

COMBUSTER — 34

COMBUSTER — 40

HPT — 44

30B

66

64

LPT — 30A

EXHAUST

62A

62B — 56A

54

56B — 62C

62F, 62G

54

54

52

48

36

46

50

38

24

26

28

30

32

EP 4 345 258 A1

EP 4 345 258 A1

200

```
┌─────────────────────────────┐
│   DETERMINE AN EXHAUST GAS  │
202 ─ │   TEMPERATURE (EGT)         │
└─────────────────────────────┘
              │
              ▼
┌─────────────────────────────┐
│   DETERMINE AN ESTIMATED    │
│   HIGH-PRESSURE TURBINE     │ ─ 204
│   OUTLET TEMPERATURE        │
└─────────────────────────────┘
              │
              ▼
┌─────────────────────────────┐
│   DETERMINE AN ESTIMATED    │
206 ─ │   HIGH-PRESSURE TURBINE     │
│   WORK                      │
└─────────────────────────────┘
              │
              ▼
┌─────────────────────────────┐
│   DETERMINE AN ESTIMATED    │
│   HIGH-PRESSURE TURBINE     │ ─ 208
│   INLET TEMPERATURE         │
└─────────────────────────────┘
              │
              ▼
┌─────────────────────────────┐
│   DETERMINE AN INDICATED    │
210 ─ │   TURBINE  TEMPERATURE (ITT)│
└─────────────────────────────┘
```

*FIG. 2*

300

308 HPC Energy

312 HPT Energy

302 State Variable Model

306 EGT

304 T4.5

310 T4.1

314 T4.5 ITT

$T_{2.5}$

$T_{3.0}$ $W_{2.5}$

BLEEDS $C_{P3.0}$

$\dot{W}_{IDG} + \dot{W}_{HYD} + \dot{W}_{Parr.}$

$\dot{W}_{HPC}$

$\dot{W}_{HPT}$

BLEEDS $W_{2.5}$ $C_{P4.5}$

HPT ΔT

FIG. 3

EP 4 345 258 A1

400

402 — DETERMINE AN INDICATED
TURBINE TEMPERATURE (ITT)
FOR A GAS TURBINE ENGINE

DETERMINE AN ITT
OPERATING MARGIN FOR — 404
THE GAS TURBINE ENGINE

406 — COMPARE THE ITT OPERATING MARGIN
TO A PREDETERMINE THRESHOLD
OPERATING MARGIN VALUE

*FIG. 4*

Europäisches
Patentamt
European
Patent Office
Office européen
des brevets

# EUROPEAN SEARCH REPORT

**Application Number**

EP 23 19 8395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/285386 A1 (CLOUTIER YVES [CA]) 16 September 2021 (2021-09-16) * paragraph [0016] - paragraph [0066]; figures * | 1-15 | INV. F01D17/08 F01D19/02 F01D21/12 F02C9/28 |
| Y | US 2019/383222 A1 (TAKAKI KAZUSHIGE [JP] ET AL) 19 December 2019 (2019-12-19) * paragraph [0023] - paragraph [0150]; figures * | 1-15 | |
| A | US 2021/062673 A1 (DROLET MARTIN [CA] ET AL) 4 March 2021 (2021-03-04) * the whole document * | 1-15 | |
| A | US 2016/252017 A1 (SCHESNY ANDREAS JAN [CH] ET AL) 1 September 2016 (2016-09-01) * the whole document * | 1-15 | |
| A | KR 2022 0124987 A (UNIV INHA RES & BUSINESS FOUND [KR]) 14 September 2022 (2022-09-14) * the whole document * | 1-15 | TECHNICAL FIELDS SEARCHED (IPC) F01D F02K F02C |

The present search report has been drawn up for all claims

| Place of search | Date of completion of the search | Examiner |
|---|---|---|
| Munich | 29 January 2024 | Teissier, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 8395

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2024

| Patent document cited in search report | | Publication date | Patent family member(s) | | Publication date |
|---|---|---|---|---|---|
| US 2021285386 | A1 | 16-09-2021 | CA | 3110392 A1 | 16-09-2021 |
| | | | EP | 3882449 A1 | 22-09-2021 |
| | | | US | 2021285386 A1 | 16-09-2021 |
| | | | US | 2023102382 A1 | 30-03-2023 |
| US 2019383222 | A1 | 19-12-2019 | CN | 110268148 A | 20-09-2019 |
| | | | DE | 112018000962 T5 | 12-12-2019 |
| | | | JP | 6875146 B2 | 19-05-2021 |
| | | | JP | 2018135859 A | 30-08-2018 |
| | | | KR | 20190102268 A | 03-09-2019 |
| | | | US | 2019383222 A1 | 19-12-2019 |
| | | | WO | 2018155552 A1 | 30-08-2018 |
| US 2021062673 | A1 | 04-03-2021 | NONE | | |
| US 2016252017 | A1 | 01-09-2016 | CN | 105927392 A | 07-09-2016 |
| | | | EP | 3061944 A1 | 31-08-2016 |
| | | | EP | 3061945 A1 | 31-08-2016 |
| | | | JP | 2016166610 A | 15-09-2016 |
| | | | KR | 20160104566 A | 05-09-2016 |
| | | | US | 2016252017 A1 | 01-09-2016 |
| KR 20220124987 | A | 14-09-2022 | NONE | | |

EPO FORM P0459

For more details about this annex : see Official Journal of the European Patent Office, No. 12/82